# EUROPÄISCHE PATENTSCHRIFT

(11) **EP 1 062 668 B1**
(45) Veröffentlichungstag und Bekanntmachung des Hinweises auf die Patenterteilung: **15.05.2002**
(21) Anmeldenummer: 99910321.1
(22) Anmeldetag: 03.03.1999
(51) Int. Cl.: G21F 9/12, A62D 3/00, B01J 20/24

(54) **ADSORPTIONSMITTEL FÜR RADIONUKLIDE**
ADSORPTION MEANS FOR RADIONUCLIDES
AGENT D'ADSORPTION POUR RADIONUCLIDES

(30) Priorität: 10.03.1998 DE 19810094
(43) Veröffentlichungstag der Anmeldung: 27.12.2000
(73) Patentinhaber: RWE NUKEM GmbH, 63755 Alzenau (DE)
(72) Erfinder: GOROVOJ, Leontiy F., Kiew, 252022 (UA); KOSYAKOV, Valentin N., Moskau, 123182 (RU)
(74) Vertreter: Stoffregen, Hans-Herbert, Dr. Dipl.-Phys.
(86) Internationale Anmeldenummer: EP9901372
(87) Internationale Veröffentlichungsnummer: WO9946779

(56) Entgegenhaltungen:
- FR-A- 2 101 276
- GB-A- 2 165 865
- GB-A- 2 188 135
- GB-A- 2 199 315
- GB-A- 2 228 259
- GB-A- 2 310 205
- US-A- 2 361 000
- DATABASE WPI Section Ch, Week 9737 Derwent Publications Ltd., London, GB; Class A11, AN 97-400951 XP002109233 & RU 2 073 015 C (GOROVOI L F), 10. Februar 1997 (1997-02-10)
- DATABASE WPI Section Ch, Week 9302 Derwent Publications Ltd., London, GB; Class A11, AN 93-014697 XP002109232 & JP 04 343762 A (NIPPON VILENE KK), 30. November 1992 (1992-11-30)
- CHEMICAL ABSTRACTS, vol. 113, no. 26, 24. Dezember 1990 (1990-12-24) Columbus, Ohio, US; abstract no. 239932, NIKITIN, A. I. ET AL: "Use of fibrous sorbents for concentrating radioactive cesium from fresh natural waters" XP002109364 & RADIOKHIMIYA (1990), 32(4), 89-93 ,1990,

## Beschreibung

Die Erfindung betrifft Chitin/Chitosan-Adsorptionsmittel, die in der Kernindustrie und in Atomkraftwerken zur Entfernung von radioaktiver Verschmutzung aus wässerigen Lösungen, und insbesondere von Elementen wie Cäsium, Uran, Plutonium, Americium, Curium usw., verwendet werden können. Sie können auch zur Reinigung von Abfällen und Trinkwasser von toxischen Schwermetallen, z.B. Blei, Quecksilber, Cadmium, Bismut, Chrom usw., verwendet werden.

In der Kernindustrie und beim Betrieb von Kernkraftanlagen entsteht eine Vielzahl von flüssigen radioaktiven Abfällen. Diese Abfälle stellen eine hohe Gefahr für die Gesundheit der Menschen und der Natur dar. Die Lagerung solcher Abfälle ist sehr kostspielig sowie unzuverlässig. Zur Verringerung des Risikos flüssiger radioaktiver Abfälle werden diese in einen festen Zustand überführt. Unter vielen dafür möglichen Wegen besitzt das Adsorptionsverfahren große Vorteile. Ein hauptsächlicher Vorteil ist es, daß man damit eine beträchtliche Verringerung des Volumens erzielen kann. Die Effizienz des Verfahrens hängt von der Qualität des Adsorptionsmittels ab. Es wurde gefunden, daß Chitin-Adsorptionsmittel viele brauchbare Eigenschaften besitzen.

Chitin ist ein natürliches Aminozucker-haltiges Polysaccharid aus (1,4)-verbundener 2-Deoxy-2-acetamido-β-D-glucose (N-Acetyl-D-glucosamin). Chitosan ist ein deacetyliertes Derivat von Chitin. Die hohe chemische und Strahlungsstabilität von Chitin und Chitosan macht es möglich, diese Biopolymeren zur Extraktion von Radionukliden aus wässerigen Lösungen zu verwenden. Die besonderen Eigenschaften des Adsorptionsverfahrens wurden für viele verschiedene Radionuklide untersucht (Tsezos, 1980; Tsezos, Volesky, 1981; Muzzarelli, 1986; Muzzarelli et al., 1986, 1989, Ershov et al., 1992, 1993; Jansson-Charrier et al., 1994; Gorovoy, Kosyakov, 1994, 1996). Viele dieser Arbeiten beschäftigen sich mit der Untersuchung der Möglichkeiten zur Extraktion von Uran.

Die Sorptionseigenschaften von Chitin und seinen Derivaten haben sich als ausreichend gut zur Extraktion von Uran aus wässerigen Lösungen sowohl in kationischer als auch in anionischer Form herausgestellt (Andreev et al., 1962). Eine wirksame Methode zur Extraktion von Uran aus Meerwasser wurde in der Verwendung von Chitinphosphat und Chitosanphosphat gefunden, die einen sehr hohen Extraktionsgrad ergeben (Sakaguchi Takashi et al., 1979 a, b, 1981). Nach diesem Verfahren bindet 1 g Chitosanphosphat 2,6 mg Uran, wenn sein Gehalt in Meerwasser 2,8 mg beträgt. Es wird also ein Extraktionsgrad von mehr als 90 % erhalten.

Vernetztes Chitosan zeigt einen Anstieg bei der Adsorption von Metallen, die 95 % erreicht, wobei dieser Anstieg vermutlich auf dem Aminogruppengehalt beruht (Kim, Choi, 1985 a). Chitosan zeigte dabei ein besseres Ergebnis als vernetztes Chitosan (Kim, Choi, 1985 b). Die Adsorption von Uran an Chitosan, die vom pH-Wert, der Größe der Sorptionsteilchen und der Gegenwart anderer Metalle abhängt, wurde untersucht (Jansson-Charrier et al., 1994). Die maximale Adsorption wurde bei einem pH von 5 erreicht, und zwar bis zu 400 mg/l. Ein Abfall der Größe der Sorptionsmittelteilchen zeigte einen positiven Effekt auf die Kinetik des Sorptionsverfahrens, was auf den begrenzenden Faktor der Diffusion hinweist. Die Adsorption von Uran nahm ab, wenn Carbonate und Phosphate vorhanden waren.

Die Kinetik (Geschwindigkeit) der Uranadsorption an Chitosan ist langsam. Eine beträchtliche Verbesserung tritt jedoch dann auf, wenn das Chitosan zum Chitosan-Phosphat oder -Dithiocarbamat modifiziert ist. In diesem Fall findet die Adsorption in den ersten 15 Minuten statt. Die höchsten Adsorptionsindices für Uran wurden mit dem Derivat N-[2(1,2-Dehydrooxyethyl)tetrahydrofuryl]chitosan erhalten, das eine Kapazität von bis zu 800 mg/g zeigte (Muzzarelli et al., 1984).

Die Bioadsorption von Uran tritt ebenfalls sehr leicht im Chitin der Zellwände von Pilzen, insbesondere von Rhizopus arrhizus, auf (Tsezos, Volesky, 1982 a; Tsezos, 1983). Es wurde gezeigt, daß bei einem pH-Wert von 2 nach 3 bis 4 Stunden der Gleichgewichtszustand erreicht wird, und während dieser Zeit 1 mg Uran pro 1 g Zellwand adsorbiert wird. Bei einem pH von 4 können bis zu 180 mg Uran in den Zellwänden adsorbiert werden, während reines Chitin bei diesem pH-Wert nur 6 mg/g Uran absorbiert, obwohl die Zellwände der Pilze nicht zu 100 % aus Chitin bestehen.

Die Verwendung von Chitin zur Reinigung von mit radioaktiven Substanzen, insbesondere Plutonium, verunreinigtem Wasser, kann eine Lösung für das Problem darstellen, die während der Extraktion, Anreicherung und Verwendung von Kernbrennstoffen gebildeten Abfälle zu neutralisieren. Der Kontakt zwischen Chitinteilchen und radioaktiver Flüssigkeit wird durch ein mehrstufiges Mischen und Absetzenlassen, Gegenstromverfahren und Durchleiten durch Türme erreicht. Das gereinigte Wasser und das verunreinigende Chitin werden mit Hilfe von Schwerkrafttrennung oder Filtration getrennt. Unter Verwendung dieses Verfahrens können über 80 % Plutonium aus wässerigen Lösungen mit einem pH-Wert zwischen 5 und 10 extrahiert werden (Silver, 1978).

Es ist bekannt, daß Chitin und das Chitin-enthaltende Material Chisit-03 Plutonium (IV), Americium (III) und Curium (III) wirksam extrahiert. Die Verteilungskoeffizienten steigen in der Ordnung: Pu(IV) < Cm(III) < Am(III). Die Adsorption von Pu(V) und Pu(VI) durch Chisite-03 ist beträchtlich besser als die Adsorption durch Chitin, und ist vergleichbar mit der Adsorption von Pu(IV) (Ershov et al., 1992 a).

Die hohe Strahlungsstabilität von Chitin und Chitosan hat es möglich gemacht, die Untersuchung dieser Materialien zur Konzentration des Abwassers von Kernbrennstoffen (radioaktive Isotope von Cäsium, Zirconium, Hafnium und anderen Elementen) aus Wasser, das in Reaktorkühlsystemen zirkuliert, durchzuführen. Cäsium wird, wie andere Alkalimetalle, an Chitin und Chitosan nicht adsorbiert. Von den anderen Kernspaltungs-Elementen wurden Untersuchungen an Seltenerdelementen, wie Cer, Europium, Thulium und Terbium, durchgeführt (Muzzarelli et al., 1972; Lopez de Alba et al. 1988 a). Der Extraktionsgrad (%) dieser Metalle an Chitin war gering: zwischen 3 und 9 %. Chitosan zeigte bessere Ergebnisse, obwohl auch diese nicht hoch waren: zwischen 30 und 45 %. Die Extraktion von Ruthenium aus Abwasser des Kernkraftwerks bei Marcoulle zeigte ebenfalls niedrige Ergebnisse. In Chitin wurden bis zu 2 und 4 % dieses Metalls adsorbiert, und in Chitosan bis zu 60 % (Muzzarelli, 1970, 1977). Chitin/Chitosan-enthaltendes Material aus Pilzen (höhere Basidiomyceten) zeigte für Uran, Plutonium, Americium, Curium und Schwermetalle bessere Adsorptionsergebnisse (Gorovoj, Kosyakov, 1994, 1996; Kosyakov et al., 1997).

Die Verwendung eines Chitin-Adsorptionsmittel zur Extraktion von Radionukliden aus wässerigen Lösungen war in dieser Hinsicht vielversprechend. Es gibt aber noch ungelöste Probleme auf diesem Gebiet, die es nicht ermöglichen, die Chitin-Adsorptionsmittel industriell anzuwenden. Das Hauptproblem besteht darin, daß es nicht möglich ist, Cäsiumisotope aus flüssigen radioaktiven Abwässern zu entfernen. Cäsium ist eine Hauptkomponente bei der radioaktiven Verseuchung von flüssigen Abfallstoffen sowohl in der Kerntechnik als auch in Kernkraftwerken. Ein anderer Nachteil der bekannten Chitin-Adsorptionsmittel ist die geringe Effizienz der Extraktion von Plutoniumionen und anderen Radionukliden aus flüssigem Abfall. Diese Nachteile erlauben es praktisch nicht, das Problem der Reinigung von flüssigen radioaktiven Abfällen zu lösen.

Aufgabe der vorliegenden Erfindung war es deshalb, ein Adsorptionsmittel für Radionuklide, wie z.B. Cäsium, Transurane usw., bereitzustellen, mit dem die bisher auftretenden Probleme behoben werden können.

Diese Aufgabenstellung wird mit der vorliegenden Erfindung gelöst.

Gegenstand der Erfindung ist ein Adsorptionsmittel nach Anspruch 1.

Bevorzugte Ausführungsformen davon ist Gegenstand des Anspruchs 2.

Weiterer Gegenstand ist ein Verfahren nach Anspruch 3 zur Herstellung des erfindungsgemäßen Adsorptionsmittels.

Bevorzugte Ausführungsformen davon sind Gegenstand der Ansprüche 4 und 5.

Weiterer Gegenstand ist auch ein Verfahren nach Anspruch 6 zur Reinigung flüssiger, Salz-enthaltender radioaktiver Abfälle.

Bevorzugte Ausführungsformen dieses Verfahrens sind Gegenstand der Ansprüche 7 und 8.

Weiterer Gegenstand ist auch die Verwendung eines erfindungsgemäßen Adsorptionsmittels zur Reinigung radioaktiver Abfälle, insbesondere aus der Kernindustrie und von Atomkraftwerken.

Gemäß der vorliegenden Erfindung werden dem aus Pilzen (höhere Basidiomyceten) erhaltenen Chitin-enthaltenden Material neue Eigenschaften verliehen, um radioaktives Cäsium aus Wasser und konzentrierten Salzlösungen zu adsorbieren. Erfindungsgemäß ist es auch möglich, die Adsorptionseigenschaften eines Chitin-enthaltenden Materials im Hinblick auf solche Radionuklide, wie z.B. Uran, Plutonium, Americium, Curium, beträchtlich zu verbessern.

Erfindungsgemäß wird dies dadurch erreicht, daß man Ferrocyanide der Übergangsmetalle in Form von Mikrokristallen innerhalb der Matrix und an der oberfläche von Frisern eines Chitinenthaltenden Materials einbaut, z.B. Kupferferrocyanid, die es in einen mikrokristallinen unlöslichen Zustand überführen. Auf Kosten ihrer reaktiven Gruppen werden sie zu einem neuen Adsorptionsmittel, das dazu fähig ist, sich mit radioaktivem Cäsium zu verbinden. Die Ferrocyanid-Mikrokristalle lockern die Adsorptionsmittel-Matrix und erhöhen ihre Oberfläche, und verbessern den Zutritt einer Lösung zu den reaktionsfähigen Zentren von Chitin.

Ein Chitin-enthaltendes Material zur Herstellung eines Adsorptionsmittels aus natürlichen oder kultivierten Pilzen (höhere Basidiomyceten) wird im russichen Patent 2073015 (Gorovoj, Kosyakov, 1997) beschrieben.

Um einem Chitin-enthaltenden Material gegenüber radioaktivem Cäsium Adsorptionseigenschaften zu verleihen, wird vorgeschlagen, zusätzliche reaktionsfähige Gruppen einzubauen, die wirksam sind, um sich mit diesem chemischen Element zu verbinden. Um die Adsorptionseigenschaften im Hinblick auf Plutonium oder andere Radionuklide zu erhöhen, wird vorgeschlagen, die Möglichkeit eines Kontaktes von Schwermetallionen mit reaktionsfähigen Zentren des Chitins zu erhöhen, indem man die Struktur des Chitin-enthaltenden Materials lockert.

Erfindungsgemäß werden als modifizierende Substanzen vorzugsweise Ferrocyanide von Übergangsmetallen vorgeschlagen. Ferrocyanide umfassen normale Salze (z.B. Me₂Fe(CN)₆), und gemischte Salze, [M₄₋₂ₓMeₓFe(CN)₆}, worin M ein einwertiges Metallkation ist, und Me ein zweiwertiges Kation eines Übergangsmetalls ist. Ferrocyanide von Übergangsmetallen zeigen eine hohe Selektiviät in Bezug auf Ionen von schweren Alkalimetallen, einschließlich den radioaktiven Isotopen von Cäsium. Kupferferrocyanid hat im Vergleich mit Ferrocyaniden an derer Metalle mehrere Vorteile. Es hat die geringste Löslichkeit (ungefähr 10⁻⁵ mol/l) und den höchsten Verteilungskoeffizienten für Cäsium (K_{d} = 5.10⁵).

Unlösliche Ferrocyanide von Übergangsmetallen können durch direkte Fällung als Ergebnis der Reduktion von geeigneten löslichen Ferrocyaniden gemäß der folgenden Reaktionsgleichung erhalten werden: 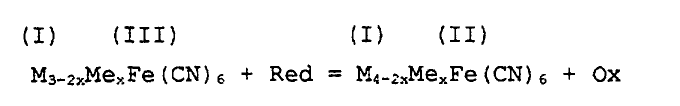 Red = Reduktionsmittel
Ox = Oxidationsmittel

Chitin-enthaltende Materialien haben bestimmte Reduktionseigenschaften.

Beim Vorliegen von K⁺ und Fe(CN)₆⁴⁻-Ionen kann die Reaktion zur Bildung verschiedener Verbindungen führen:

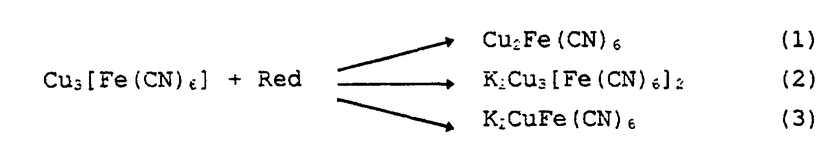

Damit die Reaktion zu (1) führt, muß das Verhältnis von Cu²⁺ und Fe(CN)₆⁴⁻ von 1:2 beibehalten werden, und die Reaktion in einer ammoniakalischen Lösung mit einer Ammoniakkonzentration von 0,1 bis 2 mol/l durchgeführt werden. Experimentell wurde bestätigt, daß die bevorzugte Konzentration von Ammoniak in einer Lösung im Bereich von 0,3 bis 0,7 mol/l liegt.

Das im russischen Patent 2073015 beschriebene Chitinenthaltende Material stellt einen Chitin-Glucan-Melanin-Komplex natürlicher Biopolymerer aus einer Zellwand von Pilzen (höhere Basidiomyceten) dar. Das Material hat eine feinfaserige Struktur. Chitin liegt in Form von Mikrofibrillen mit einein Durchmesser von 150 bis 250 Å und einer Länge von bis zu 1 bis 2 µm vor. Die Chitin-Mikrofibrillen befinden sich innerhalb der amorphen Glucan-Melanin-Matrix, wodurch die Aufrechterhaltung einer mikrofibrillen räumlichen Netzstruktur sichergestellt wird. Gleichzeitig verhindert der Glucan-Melanin-Komplex einen direkten Kontakt von Chitin-Mikrofibrillen mit der Lösung, wodurch die Wirksamkeit der Extraktion von Radionukliden, wie z.B. Uran, Plutonium, Americium, Curium, usw., und Schwermetallen, verringert wird.

Erfindungsgemäß wird dieser Nachteil vermieden und der Kontakt einer Lösung mit Chitin-Mikrofibrillen verbessert, indem man die Glucan-Melanin-Matrix durch Einführung von Ferrocyanid-Mikrokristallen in die Matrixmasse auflockert. Um dies zu erreichen, wird das Material mit löslichen Salzen, die Cu²⁺ und Fe(CN)₆³⁻ enthalten, imprägniert, und dann wird eine Reduktion durchgeführt. Um die Umsetzung zu verwirklichen, ist es notwendig, zum suspendierten Material Ammoniak zuzufügen. Innerhalb und auf der Oberfläche der Glucan-Melanin-Matrix werden Mikrokristalle von Kupferferrocyanid ausgebildet, die die Matrix lockern.

Die Erfindung wird nun näher mit den folgenden Beispielen veranschaulicht, ohne sie darauf zu beschränken:

### Beispiel 1

Das Ausgangsmaterial zur Herstellung eines Adsorptionsmittels wurde aus Mycelmasse des Basidiomyceten-Pilzes Coltricia perennis (L.: Fr.) Murr. erhalten. Dazu wurde der trockene Fruchtkörper vom Sand gereinigt, in Stücke geschnitten und zu einer homogenen Masse vermahlen. 1 kg trockene Biomasse wurden in 10 l einer 10 %-igen wässerigen NH₃-Lösung gegeben und einer Temperatur von 20 °C und einem konstanten Zerkleinern während einer Stunde unterworfen. Dann wurde die feste Masse von der Flüssigkeit abgetrennt und fünfmal mit reinem Wasser in Anteilen von 15 l gewaschen. Das erhaltene Chitin-enthaltende Material ist zur Herstellung eines Adsorptionsmittels geeignet.

Das gewaschene Material wurde in Wasser suspendiert (im Verhältnis 1:75). Zur Suspension wurden dann 3,3 Moläquivalente Cu²⁺ und 2,2 Moläquivalente Fe(CN)₆³⁻ pro 1 kg des trockenen Materials zugegeben. Diese Mischung wurde während einer Stunde einer Homogenisierung (Zerkleinern) unterworfen, und Ammoniak zugegeben, um eine Lösung von 0,5 mol/l zu erhalten. Danach wurde die Suspension einem zweistündigen Homogenisieren unterworfen. Das durch Abtrennen von der Flüssigkeit erhaltene Adsorptionsmittel wurde dreimal mit reinem Wasser gewaschen und dann getrocknet. Es enthielt an der Oberfläche und im Inneren der Fasern 1,1 % Cu₂Fe(CN)₆.

### Beispiel 2

Das Ausgangsmaterial zur Herstellung eines Adsorptionsmittels wurde aus der Mycelmasse des Basidiomyceten-Pilzes Coriolus hirsutus (Wulf.: Fr) Quel erhalten. Dazu wurde der trockene Fruchtkörper entrindet, in Stücke geschnitten und zu einer homogenen Masse vermahlen, 1 kg trockene Biomasse wurden in 15 l einer 10 %-igen wässerigen NH₃-Lösung gegeben und einer Temperatur von 20 °C und einem konstanten Homogenisieren während zwei Stunden unterworfen. Die von der Flüssigkeit abgetrennte feste Masse wurde fünfmal mit reinem Wasser in Anteilen von je 15 l gewaschen. Das erhaltene Chitin-enthaltende Material ist zur Herstellung eines Adsorptionsmittels geeignet.

Das gewaschene Material wurde in Wasser suspendiert (im Verhältnis 1:25). Zur Suspension wurden 3,3 Moläquivalente Cu²⁺ und 2,2 Moläquivalente Fe(CN)₆³⁻ zugegeben (für 1 kg des getrockneten Materials). Diese Mischung wurde einem einstündigen Homogenisieren unterworfen und Ammoniak zum Erhalt einer ammoniakalischen Lösung von 0,4 mol/l zugegeben. Danach wurde die Suspension einem zweistündigen Homogenisieren unterworfen. Das erhaltene Adsorptionsmittel wurde von der Flüssigkeit abgetrennt, dreimal mit reinem Wasser gewaschen und getrocknet. Es enthielt an der Oberfläche und innerhalb der Fasern 0,13 % Cu₂Fe(CN)₆.

### Beispiel 3

Das Ausgangsmaterial zur Herstellung eines Adsorptionsmittels wurde aus der Mycelmasse des Basidiomyceten-Pilzes Coriolus versicolor (L.: Fr) Quel erhalten. Dazu wurde der trockene Fruchtkörper von der Rinde befreit, in Stücke geschnitten und zu einer homogenen Masse vermahlen. 1 kg trockene Biomasse wurde in 20 l einer 10 %-igen wässerigen NH₃-Lösung gegeben und einer Temperatur von 40 °C und einem konstanten Homogenisieren während vier Stunden unterworfen.

Die von der Flüssigkeit abgetrennte feste Masse wurde fünfmal mit reinem Wasser in Anteilen von je 15 l gewaschen. Das erhaltene Chitin-enthaltende Material ist zur Herstellung eines Adsorptionsmittels geeignet.

Das gewaschene Material wurde in Wasser suspendiert (im Verhältnis 1:75). Dann wurden zur Suspension 10 Moläquivalente Cu²⁺ und 6,6 Moläquivalente Fe(CN)₆³⁻ zugegeben (für 1 kg des getrockneten Materials). Diese Mischung wurde einem einstündigem Zerkleinern unterworfen, und dann Ammoniak zugegeben, um eine ammoniakalische Lösung von 0,6 mol/l NH₃⁺ zu erhalten. Danach wurde die Suspension einem zweistündigen Homogenisieren unterworfen. Das erhaltene Adsorptionsmittel wurde von der Flüssigkeit abgetrennt, dreimal mit reinem Wasser gewaschen und getrocknet. Es enthielt an der Oberfläche und innerhalb der Fasern 3,2 % Cu₂Fe(CN)₆.

### Beispiel 4

Das Ausgangsmaterial zur Herstellung eines Adsorptionsmittels wurde aus der Mycelmasse des Basidiomyceten-Pilzes Coriolus zonatus (Nees: Fr) Quel erhalten. Dazu wurde der trockene Fruchtkörper von der Rinde befreit, in Stücke geschnitten und zu einer homogenen Masse vermahlen. 1 kg trockene Biomasse wurden in 10 l einer 15 %-igen wässerigen NH₃-Lösung gegeben und einer Temperatur von 60 °C und einem konstanten Homogenisieren während zwei Stunden unterworfen. Dann wurde die von der Flüssigkeit abgetrennte feste Masse fünfmal mit reinem Wasser in Anteilen von je 15 ml gewaschen. Das erhaltene Chitin-enthaltende Material ist zur Herstellung eines Adsorptionsmittels geeignet.

Das gewaschene Material wurde in Wasser suspendiert (im Verhältnis 1:25). Zur Suspension wurden dann 10 Moläquivalente Cu²⁺ und 6,6 Moläquivalente Fe(CN)₆³⁻ zugegeben (für 1 kg des getrockneten Materials). Diese Mischung wurde einem einstündigen Homogenisieren unterworfen und dann Ammoniak zum Erhalt einer ammoniakalischen Lösung von 0,9 mol/l zugegeben. Danach wurde die Suspension einem zweistündigen Homogenisieren unterworfen. Das erhaltene Suspensionsmittel wurde von der Flüssigkeit abgetrennt, dreimal mit reinem Wasser gewaschen und getrocknet. Es enthielt an der Oberfläche und innerhalb der Fasern 1,0 % Cu₂Fe(CN)₆.

### Beispiel 5

Das Ausgangsmaterial zur Herstellung eines Adsorptionsmittels wurde aus der Mycelmasse des Basidiomyceten-Pilzes Daedalea Quercina (L:Fr) Quel erhalten. Dazu wurde der trockene Fruchtkörper von der Rinde befreit, in Stücke geschnitten und zu einer homogenen Masse vermahlen. 1 kg trockene Biomasse wurde in 10 l einer 20 %-igen wässerigen NH₃-Lösung gegeben und einer Temperatur von 80 °C und einem konstanten Homogenisieren während zwei Stunden unterworfen. Die von der Flüssigkeit abgetrennte feste Masse wurde fünfmal mit reinem Wasser in Anteilen von je 15 l gewaschen. Das erhaltene Chitin-enthaltende Material ist zur Herstellung eines Adsorptionsmittels geeignet.

Das gewaschene Material wurde in Wasser suspendiert (im Verhältnis 1:75). Zur Suspension wurden 15 Moläquivalente Cu²⁺ und 6,6 Moläquivalente Fe(CN)₆³⁻ zugegeben (für 1 kg des getrockneten Materials). Diese Mischung wurde einem einstündigem Homogenisieren unterworfen und Ammoniak zum Erhalt einer ammoniakalischen Lösung von 0,5 mol/l zugegeben. Danach wurde die Suspension einem zweistündigen Homogenisieren unterworfen. Das erhaltene Adsorptionsmittel wurde von der Flüssigkeit abgetrennt, dreimal mit reinem Wasser gewaschen und getrocknet. Es enthielt an der Oberfläche und innerhalb der Fasern 11,2 % Cu₂Fe(CN)₆.

### Beispiel 6

Die Adsorptionsmitteleigenschaften der erhaltenen Adsorptionsmittel (Beispiele 1 bis 5) wurden auf statische Weise überprüft. Dazu wurde eine Modellösung des Isotops Cs-137 mit einer Aktivität von 2.10⁷ Ci/l in Trinkwasser mit einem pH = 5-7 hergestellt. Zu 400 ml der Lösung wurden 20 mg eines Adsorptionsmittels gegeben und dann unter konstantem Homogenisieren gehalten. In einer vorgegeben Zeit (1, 3, 15 und 30 Tage) wurde die Konzentration an Cs-137 in der Lösung bestimmt und der Verteilungskoeffizient (K_{d}) durch die Formel berechnet:

K_{d} = (Aₛ.V_{aq})/(A_{aq}.Mₛ),

worin Aₛ und A_{aq} die Aktivität des Radionuklids im Adsorptionsmittel bzw. der wässerigen Phase bedeuten, V_{aq} das Volumen der wässerigen Phase in ml ist, und Mₛ das Gewicht des luftgetrockneten Adsorptionsmittel in g ist.

Die Ergebnisse sind in Tabelle 1 angegeben.

**Tabelle 1**

| | Gehalt an Cu₂Fe(CN)₆ (%) | Cs-137-Verteilungskoeffizienten ml/g, nach Tagen | | | |
|---|---|---|---|---|---|
| Beispiele | | 1 | 3 | 15 | 30 |
| 1 | 1,1 | 1,0x10⁴ | 2,4x10⁴ | 0,6x10⁵ | 1,0x10⁵ |
| 2 | 0,13 | 0,6x10⁴ | 0,9X10⁴ | 0,2x10⁵ | 0,2x10⁵ |
| 3 | 3,2 | 1,5x10⁴ | 3,4x10⁴ | 1,2x10⁵ | 1,0x10⁵ |
| 4 | 1,0 | 1,2x10⁴ | 2,6x10⁴ | 0,8x10⁵ | 1,2x10⁵ |
| 5 | 11,2 | 1,8x10⁴ | 4,1x10⁴ | 1,3x10⁵ | 1,3x10⁵ |

Chitin-enthaltende Materialien ohne Cu₂Fe(CN)₆ zeigten in Bezug auf Cs-137 praktisch keine Adsorptionseigenschaften. Unter den gleichen experimentellen Bedingungen überschritten die Verteilungskoeffizienten nicht 28.

### Beispiel 7

Das Adsorptionsmittel nach Beispiel 5 wurde an wirklichen flüssigen radioaktiven Abfällen, die beim Betrieb eines Kernkraftwerkes gebildet wurden, getestet. Es handelt sich dabei um spezifische Abfälle, die sich durch einen hohen Gehalt verschiedener Salze unterscheiden. Bekannte Adsorptionsmittel für radioaktives Cäsium sind in konzentrierten Salzlösungen nicht wirksam. Die Tests wurden an Säulen mit einem Volumen von 100 ml durchgeführt, in die 10 g des Adsorptionsmittels gegeben wurden. Die Geschwindigkeit der Zuführung von Flüssigkeit betrug ein Säulenvolumen in einer Stunde. Der pH-Wert der Lösungen wurde auf 5 bis 7 eingestellt. Die Messungen der Radioaktivität wurden nach Filtration von Flüssigkeit in einer Menge von 100 Säulenvolumina durchgeführt. Die Ergebnisse der Extraktion von radioaktivem Cäsium aus Wasser und Salzlösungen sind in Tabelle 2 angegeben.

**Tabelle 2**

| | Salzgehalt g/l | Cs-134 + Cs-137, Radioaktivität, Ci/l | | Reinigung (%) |
|---|---|---|---|---|
| Abfälle | | Anfangswert | Endwert | |
| 1 | <0,1 | 3,2x10⁻⁶ | 1,9x10⁻¹⁰ | 99,994 |
| 2 | 2,06 | 2,6x10⁻⁷ | 1,8x10⁻⁹ | 99,3 |
| 3 | 10,4 | 8,3x10⁻⁵ | 2,4x10⁻⁸ | 99,97 |
| 4 | 11,2 | 4,2x10⁻⁴ | 1,9x10⁻⁷ | 99,95 |
| 5 | 107 | 6,0x10⁻³ | 1,8x10⁻⁸ | 99,9997 |
| 6 | 240 | 6,1x10⁻⁶ | 1,0x10⁻⁹ | 99,98 |
| 7 | 317 | 5,3x10⁻⁴ | 4,7x10⁻⁸ | 99,991 |
| 8 | 446 | 2,3x10⁻⁴ | 2,1x10⁻⁸ | 99, 991 |

Die Extraktion von radioaktivem Cäsium aus diesen Lösungen durch ein Chitin-enthaltendes Material ohne Cu₂Fe(CN)₆ überschritt nicht 6 %.

### Beispiel 8

Tests zur Austauschkapazität des Adsorptionsmittels wurden mit wirklichen flüssigen radioaktiven Abfällen eines Kernkraftwerks durchgeführt. Der Gehalt an Salzen in der Lösung betrug 317 g/l (Beispiel 7, Tabelle 2). Der pH-Wert der Lösungen wurde auf 6 eingestellt. Die experimentellen Bedingungen waren ähnlich wie die im Beispiel 7. Durch eine Säule mit dem Adsorptionsmittel wurden 700 Säulenvolumina filtrierter Flüssigkeit hindurchgeführt. Die Messungen der Cs-134 + Cs-137-Aktivität wurden nach jeweils 100 Volumina der filtrieren Lösung durchgeführt. Die Ergebnisse sind in Tabelle 3 zusammengestellt.

**Tabelle 3**

| Säulen-volumina | Grad der Radioaktivität nach Filtration, Ci/l |
|---|---|
| 0 (anfänglich) | 5,3x10⁻¹ |
| 100 | 4,7x10⁻⁵ |
| 200 | 1,8x10⁻⁷ |
| 300 | 2,5x10⁻⁷ |
| 400 | 3,7x10⁻⁷ |
| 500 | 7,6x10⁻⁷ |
| 600 | 1,3x10⁻⁷ |
| 700 | 1,7x10⁻⁷ |

Dieses Experiment zeigt die Zuverlässigkeit des erfindungsgemäßen Adsorptionsmittels in konzentrierter Salzlösung. Sogar nach Filtrieren von 700 Säulenvolumina einer solchen Lösung wird eine Reinigung von mehr als 99,9 % (Entfernung von radioaktivem Cäsium) erreicht. Es übertrifft die Wirkung aller bekannten Adsorptionsmittel.

### Beispiel 9

Aus den Pilzen der Beispiele 1 bis 5 erhaltenes Chitin-enthaltendes Material besitzt in Bezug auf Uran, Plutonium, Americium, Curium usw. Adsorptionsmitteleigenschaften (Gorovoj, Kosyakov, 1997; Kosyakov et al., 1997). Das erfindungsgemäße erhaltene Sorptionsmittel übertrifft das Ausgangsmaterial im Hinblick auf die Verteilungskoeffizienten der radioaktiven Transurane beträchtlich. Für die Experimente wurden Lösungen mit Pu-239 und Am-241 verwendet. Die Radioaktivität der anfänglichen Lösungen betrug 1000 Bq/l. Der Salzgehalt wurde auf 60 g/l eingestellt. Der pH-Wert der Lösungen wurde auf 6,5 eingestellt. Die Extraktion der Radionuklide wurden auf statische Weise durchgeführt. In 50 ml einer radioaktiven Lösung wurden 500 mg eines Chitin-enthaltendes Materials oder 500 mg des erfindungsgemäßen Adsorptionsmittels gegeben. Die Suspension wurde 30 Minuten gemischt, zentrifugiert.und der Gehalt an Radionukliden in der flüssigen Phase bestimmt. Der Verteilungskoeffizient (K_{d}) wurde nach der Formel (siehe Beispiel 6) berechnet. Die Ergebnisse sind in Tabelle 4 angegeben.

**Tabelle 4**

| Adsorptions-mittel | K_{d}, ml/g | |
|---|---|---|
| | Pu-239 | Am-241 |
| Chitin-enthaltendes Material | 1500 | 5900 |
| Adsorptionsmittel (Erfindung) | 8400 | 15000 |

## Patentansprüche

1. Adsorptionsmittel für Radionuklide und Schwermetalle auf der Basis eines feinfaserigen Chitin-enthaltenden Materials, das aus natürlichen oder in Kultur erhaltenen Pilzen (höhere Basidiomyceten) erhalten wurde,
**dadurch gekennzeichnet,**
**daß** es unlösliche Ferrocyanide der Übergangsmetalle in Form von Mikrokristallen innerhalb der Matrix und an der Oberfläche von Fasern eines Chitin-enthaltenden Materials enthält.

2. Adsorptionsmittel nach Anspruch 1,
**dadurch gekennzeichnet,**
**daß** das unlösliche Ferrocyanid Kupferferrocyanid ist.

3. Verfahren zur Herstellung des Adsorptionsmittels nach Anspruch 1 oder 2,
**dadurch gekennzeichnet,**
**daß** man eine Chitin-enthaltende Masse mit Cu²⁺- und Fe(CN)₆³⁻-Salzen imprägniert und diese dann in einem ammoniakalischen Medium in einen mikrokristallinen unlöslichen Zustand überführt.

4. Verfahren nach Anspruch 3,
**dadurch gekennzeichnet,**
**daß** das Verhältnis von Cu²⁺ und Fe(CN)₆³⁻ 1:2 beträgt.

5. Verfahren nach Anspruch 3,
**dadurch gekennzeichnet,**
**daß** es bei einer Ammoniakkonzentration von 0,1 bis 2 mol/l durchgeführt wird, vorzugsweise bei einer Ammoniakkonzentration von 0,3 bis 0,7 mol/l.

6. Verfahren zur Reinigung flüssiger, Salze-enthaltender radioaktiver Abfälle,
**dadurch gekennzeichnet,**
**daß** man ein Adsoiptionsmittel nach Anspruch 1 oder 2 verwendet und das Reinigungsverfahren in einer Säule, statisch oder auf andere Weise durchführt.

7. Verfahren nach Anspruch 6,
**dadurch gekennzeichnet,**
**daß** die Kontaktzeit des Adsorptionsmittels mit einer zu reinigenden Lösung nicht weniger als 5 Minuten, vorzugsweise 30 bis 120 Minuten, beträgt.

8. Verfahren nach Anspruch 6 oder 7,
**dadurch gekennzeichnet,**
**daß** in der zu reinigenden Lösung der pH-Wert auf 3 bis 11, vorzugsweise auf 5 bis 8, eingestellt wird.

9. Verwendung eines Adsorptionsmittels nach Anspruch 1 oder 2 zur Reinigung radioaktiver Abfälle, insbesondere aus der Kernindustrie und von Atomkraftwerken.

## Claims

1. An adsorbent for radionuclides and heavy metals on the basis of a fine-fibered chitin-containing material obtained from natural fungi or fungi obtained by culture (higher basidiomycetes),
**characterized in that**
said adsorbent contains insoluble ferrocyanide of the transition metals in the form of microcrystals inside the matrix and on the surface of fibers of a chitin-containing material.

2. Adsorbent according to claim 1,
**characterized in that**
the insoluble ferrocyanide is copper ferrocyanide.

3. A process for manufacture of the adsorbent according to claim 1 or 2,
**characterized in that**
a chitin-containing mass is impregnated with Cu²⁺ and Fe(CN)₆³⁻ salts and then converted into a microcrystalline insoluble state in an ammoniacal medium.

4. Process according to claim 3,
**characterized in that**
the ration of Cu²⁺ to Fe(CN)₆³⁻ is 1:2.

5. Process according to claim 3,
**characterized in that**
it is performed with an ammonia concentration of 0.1 to 2 mol/l, preferably with an ammonia concentration of 0.3 to 0.7 mol/l.

6. Process for cleaning of salt-containing radioactive effluents,
**characterized in that**
an adsorbent according to claim 1 or 2 is used and the cleaning process is performed in an column, statically or in another manner.

7. Process according to claim 6,
**characterized in that**
the contact time of the adsorbent with a solution to be cleaned is no less than 5 minutes, preferably 30 to 120 minutes.

8. Process according to claim 6 or 7,
**characterized in that**
the pH value in the solution to be cleaned is set to 3 to 11, preferably to 5 to 8.

9. Use of an adsorbent according to claim 1 or 2 for cleaning of radioactive effluents, in particular from the nuclear industry and from nuclear power stations.

## Revendications

1. Adsorbant pour radionucléides et métaux lourds à base d'une matière à fibres fines contenant de la chitine, obtenu à partir de champignons naturels ou de culture (basidiomycètes supérieurs),
**caractérisé en ce**
**qu'**il contient des ferrocyanures insolubles des métaux transitoires sous forme de microcristaux au sein de la matrice et une matière contenant de la chitine à la surface des fibres.

2. Adsorbant selon la revendication 1,
**caractérisé en ce**
**que** le ferrocyanure insoluble est du ferrocyanure cuprique.

3. Procédé pour fabriquer l'adsorbant selon la revendication 1 ou 2,
**caractérisé en ce**
**que** l'on imprègne un mélange contenant de la chitine avec des sels Cu²⁺ et Fe(CN)₆³⁻ puis qu'on le réduit à un état microcristallin insoluble dans un fluide ammoniaco-alcalin.

4. Procédé selon la revendication 3,
**caractérisé en ce**
**que** le rapport entre le Cu²⁺ et le Fe(CN)₆³⁻ est de 1:2.

5. Procédé selon la revendication 3,
**caractérisé en ce**
**qu'**il est réalisé sous une concentration d'ammoniac de 0,1 à 2 mol/l, de préférence sous une concentration d'ammoniac de 0,3 à 0,7 mol/l.

6. Procédé pour nettoyer des déchets radioactifs liquides contenant des sels,
**caractérisé en ce**
**que** l'on utilise un adsorbant selon la revendication 1 ou 2 et que l'on réalise le nettoyage dans une colonne de façon statique ou d'une autre manière.

7. Procédé selon la revendication 6,
**caractérisé en ce**
**que** le contact de l'adsorbant avec une solution à nettoyer dure au moins 5 minutes, de préférence 30 à 120 minutes.

8. Procédé selon la revendication 6 ou 7,
**caractérisé en ce**
**que** le pH de la solution à nettoyer est amené à une valeur entre 3 et 11, de préférence entre 5 et 8.

9. Utilisation d'un adsorbant selon la revendication 1 ou 2 pour nettoyer des déchets radioactifs, provenant notamment de l'industrie nucléaire et de centrales nucléaires.
